# FASCICULE DE BREVET EUROPEEN

(11) **EP 2 244 929 B1**
(45) Date de publication et mention de la délivrance du brevet: **22.02.2012**
(21) Numéro de dépôt: 08871765.7
(22) Date de dépôt: 02.10.2008
(51) Int. Cl.: B62D 25/14, F16B 1/00

(54) **DISPOSITIF DE FIXATION D'UN PREMIER SOUS-ENSEMBLE A UN SECOND SOUS-ENSEMBLE D'UN VEHICULE AUTOMOBILE**
VORRICHTUNG ZUR BEFESTIGUNG EINER ERSTEN BAUGRUPPE AN EINER ZWEITEN BAUGRUPPE IN EINEM KRAFTFAHRZEUG
DEVICE OR ATTACHING A FIRST SUB-ASSEMBLY TO A SECOND SUB-ASSEMBLY IN AN AUTOMOBILE

(30) Priorité: 28.01.2008 FR 0850503
(43) Date de publication de la demande: 03.11.2010
(73) Titulaire: Faurecia Interieur Industrie, 92000 Nanterre (FR)
(72) Inventeur: BRANCHERIAU, Christian, F-95220 Herblay (FR)
(74) Mandataire: Domenego, Bertrand
(86) Numéro de dépôt international: PCT/FR2008/051785
(87) Numéro de publication internationale: WO 2009/095571

(56) Documents cités:
- WO-A-02/46627
- WO-A-2006/105585
- FR-A- 2 874 582
- FR-A- 2 882 022
- US-A1- 2006 138 806

## Description

La présente invention concerne en général les dispositifs de fixation d'un premier sous ensemble structurel ou fonctionnel à un second sous ensemble structurel ou fonctionnel d'un véhicule automobile, et notamment un dispositif de fixation d'une planche de bord sur la caisse d'un véhicule.

Plus précisément, l'invention concerne un dispositif de fixation d'un premier sous ensemble structurel ou fonctionnel à un second sous ensemble structurel ou fonctionnel d'un véhicule automobile, du type comprenant :
un organe femelle lié au second sous ensemble et définissant intérieurement une cavité interne ;
- un organe mâle lié au premier sous ensemble, l'organe mâle étant susceptible de s'engager dans la cavité interne de l'organe femelles suivant une direction, d'engagement ;
- un organe de blocage, mobile par rapport à l'organe femelle à l'intérieur de là cavité interne, entre une positon d'attente dans laquelle l'organe de blocage autorise l'engagement de l'organe mâle dans l'organe femelle suivant la direction d'engagement, et une position active dans laquelle l'organe de blocage coopère avec l'organe mâle en vue de bloquer l'organe mâle par rapport à l'organe femelle, au moins selon la direction d'engagement.

Un tel dispositif est connu de la demande de brevet déposée sous le numéro FR05 01433 et US2006/138806 qui décrit que l'organe de blocage est une carne rotative coopérant avec une portion de l'organe mâle formant suiveur de came. L'organe de blocage est sollicité vers sa position active par un ressort de torsion logé dans l'organe femelle. Ce dispositif présente le défaut de comporter un grand nombre de pièces, d'être lourd, et d'être particulièrement coûteux.

Dans ce contexte, l'invention vise à proposer un dispositif de fixation qui soit plus simple, plus léger et moins coûteux.

A cette fin, l'invention porte sur un dispositif de fixation selon la revendication 1.

Le dispositif de fixation peut également comporter une ou plusieurs des caractéristiques selon les revendications dépendantes 2 à 11, considérées individuellement ou selon toutes les combinaisons techniquement possibles.

Selon un second aspect, invention porte sur un procédé selon la revendication 12 de fixation d'un premier ensemble structurel ou fonctionnel à un second sous ensemble structurel ou fonctionnel d'un véhicule automobile à l'aide d'un dispositifs de fixation présentant les caractéristiques ci-dessus.

Selon un troisième aspect, l'invention porte sur un Procédé selon la revendication 13 de démontage d'un premier sous ensemble structurel ou fonctionnel fixé à un second sous ensemble structurel ou fonctionnel d'un véhicule automobile à l'aide d'un dispositif de fixation présentant les caractéristiques ci-dessus.

Selon un quatrième aspect, l'invention porte sur un procédé selon la revendication 14 de remontage d'un premier sous-ensemble structurel ou fonctionnel fixé à un second sous-ensemble structurel ou fonctionnel d'un véhicule automobile à l'aide d'un dispositif de fixation présentant les caractéristiques ci-dessus.

Selon un cinquième aspect, l'invention porte sur une ensemble do fixation selon la revendication 15.

Selon un sixième aspect, l'invention porte sur un véhicule automobile comprenant:
- une caisse ;
- une planche de bord comportant une traverse transversale;
- au moins deux dispositifs de fixation présentant les caractéristiques ci-dessus, les dispositifs de fixation fixant rigidement deux extrémités de la traverse à des éléments rigides de la caisse ;
la caisse comprenant des côtés de caisses disposés latéralement vers l'extérieur du véhicule par rapport auxdits éléments rigides, les côtés de caisse comportant des orifices traversant permettant l'accès aux têtes des vis des dispositifs de fixation.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue schématique en perspective montrant une traverse de planche de bord fixée à des équerres de caisse par des dispositifs de fixation conformes à l'invention ;
- la figure 2 est une vue en perspective d'une équerre de la figure 1 portant deux dispositifs de fixation, et d'un côté de caisse sur lequel l'équerre est fixée ;
- la figure 3 est une vue schématique, en coupe axiale, d'un des dispositifs de fixation de la figure 2, l'organe de blocage du dispositif de fixation occupant sa position d'attente ;
- la figure 4 est une vue en coupe similaire à celle de la figure 3, l'organe de blocage occupant sa position active ;
- la figure 5 est une vue en coupe similaire aux figures 3 et 4, après escamotage de l'organe de blocage à partir de sa position active vers sa position d'attente, en vue de démonter la planche de bord,
- la figure 6 est une représentation schématique, en coupe, du côté de caisse et des dispositifs de fixation de la figure 2,
- la figure 7 est une vue analogue à celle de la figure 4 et illustre un deuxième mode de réalisation de l'invention,
- la figure 8 est une vue analogue à celle de la figure 5, pour le deuxième mode de réalisation de l'invention, et
- la figure 9 est une vue en coupe similaire à celle des figures 7 et 8, après repositionnement de l'organe de blocage en position active à partir de sa position d'attente, en vue de remonter la planche de bord.

Dans la description qui va suivre, les directions longitudinale et transversale seront entendues relativement au sens de déplacement normal du véhicule.

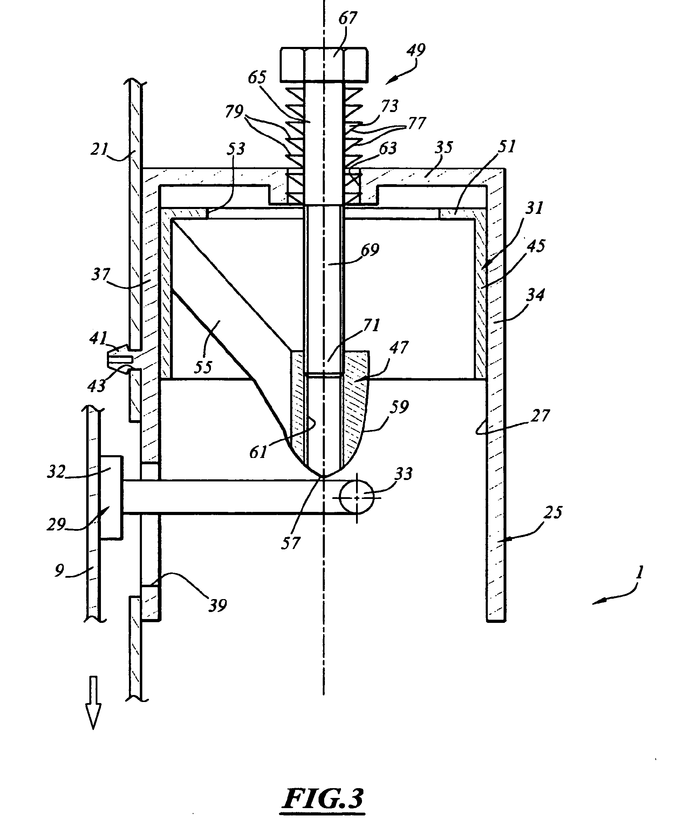

Le dispositif illustré notamment sur les figures 3 à 5 est prévu pour assurer la fixation d'un premier sous ensemble structurel ou fonctionnel du véhicule sur une second sous ensemble structurel ou fonctionnel du véhicule. Ainsi, il est par exemple, mais pas exclusivement, adapté à la fixation de la planche de bord sur la caisse du véhicule ou d'un siège sur la caisse du véhicule.

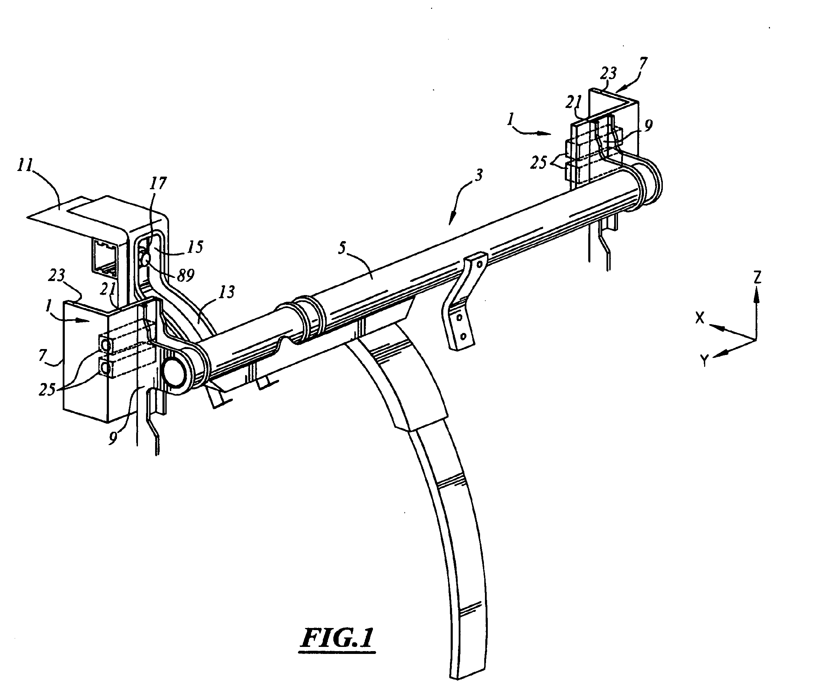

Comme le montre la figure 1, le dispositif de fixation 1 est destiné à fixer rigidement une élément structurel de la planche de bord 3, par exemple la traverse 5 de la planche de bord, à un élément structurel 7 du véhicule.

La traverse 5 est généralement fixée en trois points à la caisse. Elle est fixée à deux équerres de caisse 7 à ses deux extrémités opposées par l'intermédiaire d'étriers 9. Elle est également fixée à la traverse inférieure de baie 11 par l'intermédiaire d'une patte de fixation 13 dite liaison TIB. La liaison TIB 13 est solidaire de la traverse 5. Elle présente par ailleurs une partie d'appui et de fixation 15 tournée vers la traverse inférieure de baie 11. La traverse inférieure de baie passe transversalement sous le pare-brise du véhicule. La partie 15 est fixée à la traverse 11 par l'intermédiaire de dispositifs de fixation à déclenchement automatique 17, du type décrit dans les demandes de brevets portant les numéros de dépôt FR 06 54 349, FR 07 00 490, FR 07 02 560 et FR 07 56 711.

Ces moyens de fixation automatique 17 comportent un organe femelle fixé à la traverse inférieure de baie, un organe mâle fixé à la partie 15 de la liaison TIB, l'engagement de l'organe mâle dans l'organe femelle provoquant automatiquement le verrouillage de l'organe mâle et de l'organe femelle l'un par rapport à l'autre.

Les étriers 9 sont rigidement fixés chacun à une équerre 7 par un, de préférence par deux dispositifs de fixation du type représenté sur les figures 3 à 5.

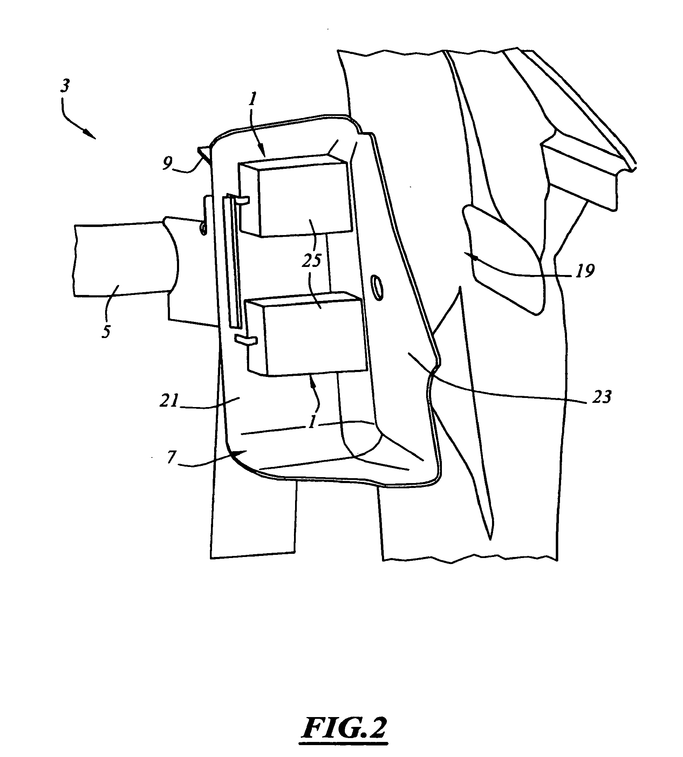

Comme visible sur la figure 2, les équerres de caisse 7 sont rigidement fixées sur les côtés de caisse 19. Les équerres 7 comportent chacune une aile transversale 21 tournée vers l'étrier 9 correspondant, et une aile 23 sensiblement longitudinale rigidement fixée au côté de caisse. L'aile 23 s'étend vers l'avant à partir d'un bord de l'aile 21 tourné vers l'extérieur du véhicule.

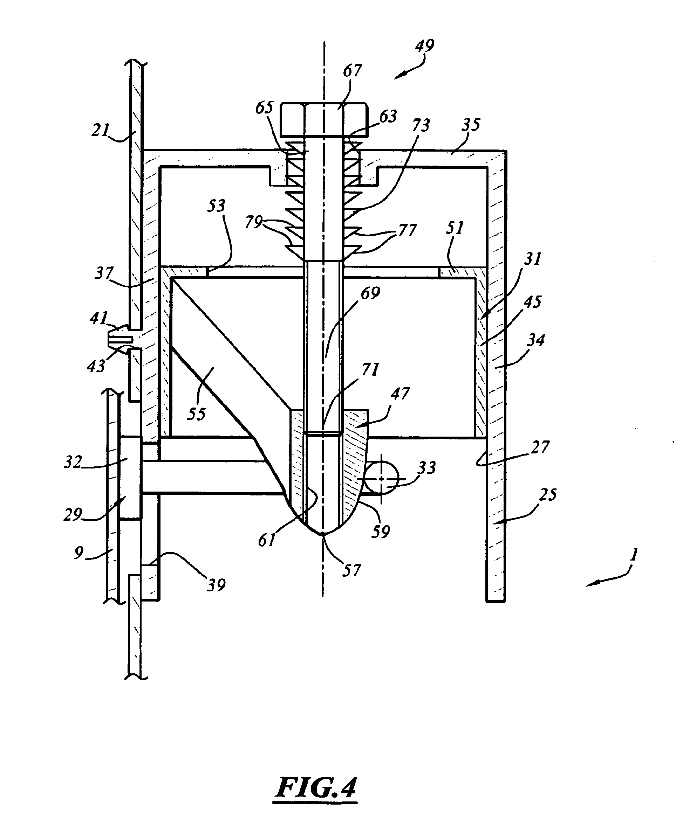

Comme le montrent les figures 3 à 5, chaque dispositif de fixation 1 comporte :
- un organe femelle 25 prévu pour être fixé sur l'aile 21 d'une des équerres 7, et définissant intérieurement une cavité interne 27 ;
- un organe mâle 29 prévu pour être fixé sur un étrier 9, l'organe mâle 29 étant susceptible de s'engager dans la cavité interne 27 de l'organe femelle suivant une direction d'engagement longitudinale ;
- un organe de blocage 31 mobile par rapport à l'organe femelle 25 à l'intérieur de la cavité interne 27, entre une position d'attente (figure 3) dans laquelle l'organe de blocage autorise l'engagement de l'organe mâle 29 dans l'organe femelle 25 suivant la direction d'engagement, et une positon active (figure 4) dans laquelle l'organe de blocage coopère avec l'organe mâle en vue de bloquer l'organe mâle 29 par rapport à l'organe femelle selon la direction d'engagement.

L'organe mâle 29 est une boucle rectangulaire comportant quatre tronçons perpendiculaires les uns aux autres, délimitant intérieurement un orifice central rectangulaire. La boucle 29 est rigidement fixée à l'équerre 9 par un tronçon 32, par exemple par l'intermédiaire de soudures. Le tronçon 33 parallèle et opposé au tronçon 32 présente une section circulaire. La boucle 29 est orientée de telle sorte qu'elle s'étend dans un plan perpendiculaire à la direction transversale. Elle fait saillie vers l'avant par rapport à l'équerre 9.

L'organe femelle 25 comporte une enveloppe externe 34 tubulaire, d'axe central prévu pour être transversal et de section rectangulaire perpendiculairement à son axe. L'enveloppe 34 est fermée par un fond 35 à une première extrémité axiale et est ouverte à son extrémité axiale opposée. L'enveloppe 34 comporte sur une paroi 37 prévue pour être perpendiculaire à la direction d'engagement, une ouverture 39 de passage de l'organe mâle 29. L'ouverture 39 est par exemple rectangulaire et disposée à proximité de l'extrémité axiale ouverte de l'enveloppe.

L'enveloppe 34 définit intérieurement la cavité 27.

L'organe femelle 25 est fixé sur une face de l'aile 21 tournée vers l'avant du véhicule, c'est-à-dire à l'opposé de l'étrier 9. Elle est orientée de telle sorte que le fond 35 soit tourné vers l'extérieur du véhicule, l'extrémité ouverte de l'enveloppe étant tournée vers l'intérieur du véhicule. L'organe femelle 25 est fixé à l'aile 21 par l'intermédiaire d'une agrafe 41 prévue sur la paroi 37, l'agrafe 41 étant engagée dans un orifice 43 de l'aile 21.

L'organe de blocage 31 comprend :
- une partie tubulaire 45 de guidage de l'organe de blocage par rapport à l'organe femelle ;
- un pêne 47 destiné à coopérer avec la boucle 29 en vue de bloquer l'organe mâle par rapport à l'organe femelle.

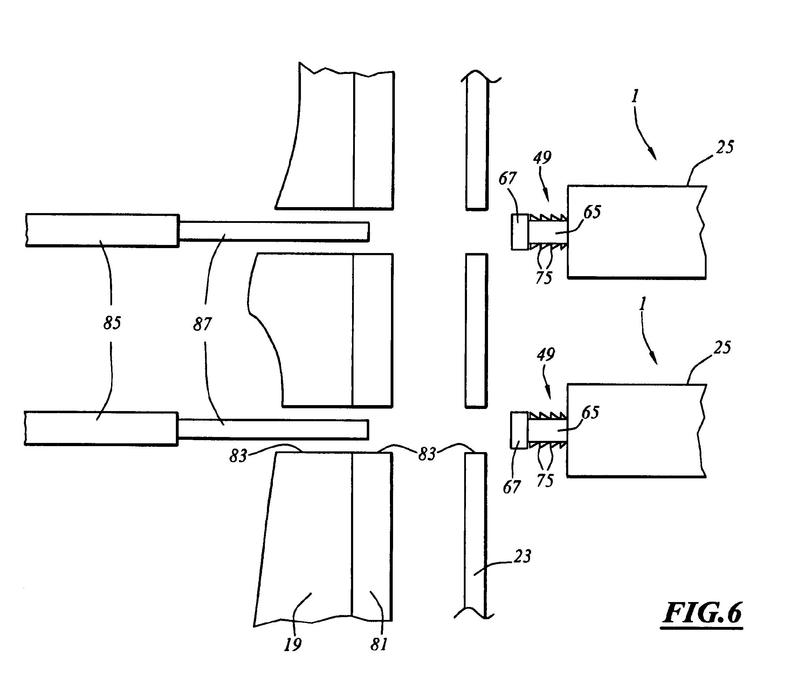

Par ailleurs, le dispositif de fixation comporte une vis métalloplastique 49 susceptible de coopérer avec un actionneur linéaire (figure 6) en vue de déplacer l'organe de blocage de sa position d'attente à sa position active.

La partie de guidage 45 est une pièce tubulaire creuse, coaxiale à l'organe femelle, de section rectangulaire perpendiculairement à la direction transversale. La section externe de la partie 45 correspond sensiblement à la section interne de l'enveloppe 34. La partie 45 est fermée à une première extrémité axiale par un fond 51 percé d'une ouverture centrale 53. La partie 45 est ouverte à l'extrémité axiale opposée.

Le pêne 47 est disposé sensiblement sur l'axe central de l'enveloppe 34 et de la partie de guidage 45. Il est rigidement fixé à la partie de guidage 45 par l'intermédiaire d'un bras 55. Le pêne 47 possède un nez effilé 57 et une face concave 59 tournée vers l'avant. Le nez pointe transversalement vers l'intérieur du véhicule. La face concave 59, considérée en section dans un plan horizontal comme sur les figures 4 à 6, s'étend vers l'avant et vers l'extérieur du véhicule à partir du nez 57. Sa concavité est tournée vers l'avant du véhicule. La courbure de la face 59 est plus prononcée à proximité du nez 57 et va en diminuant vers l'extérieur du véhicule.

Le pêne 47 comporte un trou borgne taraudé intérieurement 61 s'étendant suivant l'axe central de l'enveloppe 34, ouvert vers l'extérieur du véhicule. En variante, le trou 61 est débouchant.

La vis métalloplastique 49 est engagée dans un orifice circulaire 63 ménagé au centre du fond 35 de l'enveloppe. La vis 49 s'étend suivant l'axe central de l'enveloppe 34. La vis 49 est libre en translation axialement et en rotation par rapport à l'organe femelle 25. Elle présente une partie externe 65 terminée par une tête hexagonale 67, et une partie interne 69 prolongeant la partie externe 65 à l'opposé de la tête 67.

La partie interne 69 est filetée, son filetage étant conjugué du taraudage du trou 61. La partie interne 69 présente une partie d'extrémité 71 vissée dans le trou taraudé 61. La partie d'extrémité 71 s'étend par exemple sur un tiers de la longueur totale de la partie interne 69.

La partie externe 65, la tête 67 et la partie interne 69 sont métalliques. Par ailleurs, la vis 49 comprend une matière plastique 73 surmoulée autour de la partie externe 65. La matière plastique est conformée de manière à former autour de la partie externe 65 une pluralité de collerettes 75 superposées axialement. Les collerettes 75 sont toutes identiques et coaxiales. Elles sont délimitées vers l'intérieur du véhicule par une face tronconique 77 et vers l'extérieur du véhicule par une face plane 79 sensiblement perpendiculaire à la direction axiale transversale.

Chacune des faces 77 va en s'évasant de l'intérieur vers l'extérieur du véhicule.

La partie externe 65 présente un diamètre inférieur au diamètre de l'orifice 63. En revanche, les collerettes 75 présentent un diamètre supérieur à celui de l'orifice 63.

La position d'attente de l'organe de blocage est illustrée sur la figure 3. La partie de guidage 45 se trouve dans la cavité interne 27 à proximité du fond 35. La tête 67 de la vis et la partie externe 65 font saillie axialement vers l'extérieur de l'organe femelle par rapport au fond 35.

L'extrémité de la partie 65 opposée à la tête est engagée dans le trou 61.

Dans cette position, les collerettes 75 constituent des organes de freinage. Elles coopèrent avec le bord de l'orifice 63 pour maintenir l'organe de blocage à sa position d'attente quand cet organe de blocage subit par l'intermédiaire de l'organe de transmission 49 une sollicitation axiale vers sa position active d'intensité inférieure ou égale à une limite prédéterminée. Cette limite prédéterminée est typiquement comprise entre 20 kg et 100 kg et de préférence vaut entre 50 kg et 81 kg.

En revanche, les collerettes 75 autorisent le déplacement de l'organe de blocage de sa position d'attente vers sa position active quand l'organe de blocage subit par l'intermédiaire de l'organe de transmission 49 une sollicitation vers sa position active d'intensité supérieure à la limite prédéterminée.

Le pêne 47 est décalé axialement par rapport à l'ouverture 39, aucune zone du pêne 47 ne se trouvant en vis-à-vis de l'ouverture 39.

Dans la position de la figure 3, un actionneur disposé à l'extérieur de la cavité interne de l'organe femelle est susceptible de venir appuyer sur la tête 67 de la vis métalloplastique, de manière à provoquer le déplacement de l'organe de blocage depuis sa position d'attente jusqu'à sa position active.

La position active de l'organe de blocage est illustrée sur la figure 4. La tête 67 de la vis se trouve à proximité immédiate et à l'extérieur du fond 35 de l'enveloppe. La partie externe de la vis est située pratiquement entièrement à l'intérieur de l'organe femelle. L'extrémité de la partie 65 jouxtant la tête 67 est engagée dans l'orifice 63. Dans cette position, les collerettes 75 constituent des moyens anti-retour. Elles coopèrent avec le bord de l'orifice 63 pour bloquer le déplacement de l'organe de blocage 31 axialement depuis sa position active vers sa position d'attente.

Quand l'organe mâle 29 est engagé dans l'organe femelle, et que l'organe de blocage est dans sa position active, le pêne 47 de l'organe de blocage est engagé dans l'orifice central de la boucle, la face concave 59 étant en appui contre le tronçon 33. Du fait de la forme de la face concave 59, le pêne 47 exerce une sollicitation longitudinale sur le tronçon 33 de la boucle, vers l'avant du véhicule.

Comme le montre la figure 6, la caisse du véhicule comporte des côtés de caisses 19 et des doublures de caisse 81, disposés latéralement vers l'extérieur du véhicule par rapport aux ailes 23 des équerres portant les organes femelles. De chaque côté du véhicule, le côté de caisse 19, la doublure de caisse 81 et l'aile 23 sont percés par des lumières 83 disposées axialement dans le prolongement les unes des autres. Les lumières 83 sont disposées axialement dans le prolongement des vis 49. Elles permettent l'accès aux têtes 67 de ces vis à partir de l'extérieur du véhicule.

Le procédé de fixation de la planche de bord 3 sur la caisse du véhicule va maintenant être détaillé.

Les organes femelles 25 sont d'abord fixés sur les ailes 21 des équerres de caisse 7. Pour cela, les agrafes 41 sont engagées dans les orifices 43. Par exemple, deux organes femelles 25 sont disposés l'un au-dessus de l'autre, avec leurs axes orientés transversalement. Au moment où les organes femelles sont fixés, les organes de blocage sont en position d'attente. Les têtes 67 des vis métalloplastiques sont orientées vers l'extérieur du véhicule.

Les organes mâles 29 sont ensuite rigidement fixés, par exemple par soudage ou boulonnage, sur les étriers 9 de la planche de bord. Les organes mâles pointent vers l'avant du véhicule et sont placés dans des plans perpendiculaires à la direction transversale.

La planche de bord 3 est saisie par un préhenseur (non représenté) et est approchée de la caisse de manière à placer les organes mâles des dispositifs de fixation 1 et 17 longitudinalement à l'arrière des organes femelles desdits dispositifs 1 et 17. La planche de bord 3 est ensuite déplacée vers l'avant de manière à provoquer l'engagement des organes mâles des dispositifs 1 et 17 dans les organes femelles desdits dispositifs.

Quand l'organe mâle du dispositif 17 a suffisamment pénétré dans l'organe femelle, le verrouillage de l'organe mâle dans l'organe femelle est automatiquement déclenché, un organe de blocage se déplaçant à l'intérieur de l'organe femelle sous l'effet de la sollicitation d'un organe élastique. L'organe de blocage vient bloquer longitudinalement l'organe mâle du dispositif 17 par rapport à l'organe femelle.

Il est à noter que, pendant la fixation de la planche de bord 3 sur la traverse inférieure de baie 11 à l'aide du dispositif 17, les organes mâles des dispositifs de fixation 1 des extrémités de la traverse restent libres vis-à-vis des éléments femelles de ces mêmes dispositifs 1. Une fois le dispositif de fixation 17 activé, les extrémités de la traverse 5 occupent sensiblement leurs positions nominales, avec un décalage longitudinal compris entre 0 et 2 millimètres par rapport à cette position nominale.

Les dispositifs de fixation 1 des extrémités de la traverse sont ensuite verrouillés. Ce verrouillage peut être réalisé par un opérateur. Alternativement, un capteur peut détecter que l'organe de blocage du dispositif de fixation 17 a atteint sa position de verrouillage de l'organe mâle par rapport à l'organe femelle et transmettre cette information automatiquement à un calculateur. Ce calculateur commande le verrouillage des dispositifs de fixation 1 des extrémités de la traverse. De tels capteurs sont décrits dans la demande de brevet déposée sous le numéro FR 07 02 560.

Les dispositifs de fixation 1 sont verrouillés par des actionneurs linéaires 85 montés sur le préhenseur de planche de bord (figure 6). Les actionneurs linéaires sont typiquement des vérins pneumatiques ou hydrauliques. Les tiges 87 des vérins sont placées dans le prolongement axial des orifices 83. De manière à déplacer l'organe de blocage de chaque dispositif de fixation de sa position d'attente à sa position active, les tiges des vérins 87 sont déployées. Elles s'engagent dans les orifices 83 et viennent appuyer sur les têtes 67 des vis, de manière à solliciter celles-ci vers l'intérieur du véhicule, c'est-à-dire vers l'intérieur de l'organe femelle. L'effort appliqué est supérieur à la limite prédéterminée indiquée ci-dessus, de telle sorte que les organes de blocage 31 se déplacent depuis leurs positions d'attente jusqu'à leurs positions actives. Les organes de blocage verrouillent alors les organes mâles 29 par rapport aux organes femelles.

Les tiges 87 des vérins sont ensuite escamotées, et le préhenseur est séparé de la planche de bord. Des bouchons en matière plastique sont placés sur les orifices 83 des côtés de caisse. La planche de bord occupe alors sa position d'usage par rapport à la caisse.

La planche de bord peut être démontée de la caisse suivant le procédé ci-dessous.

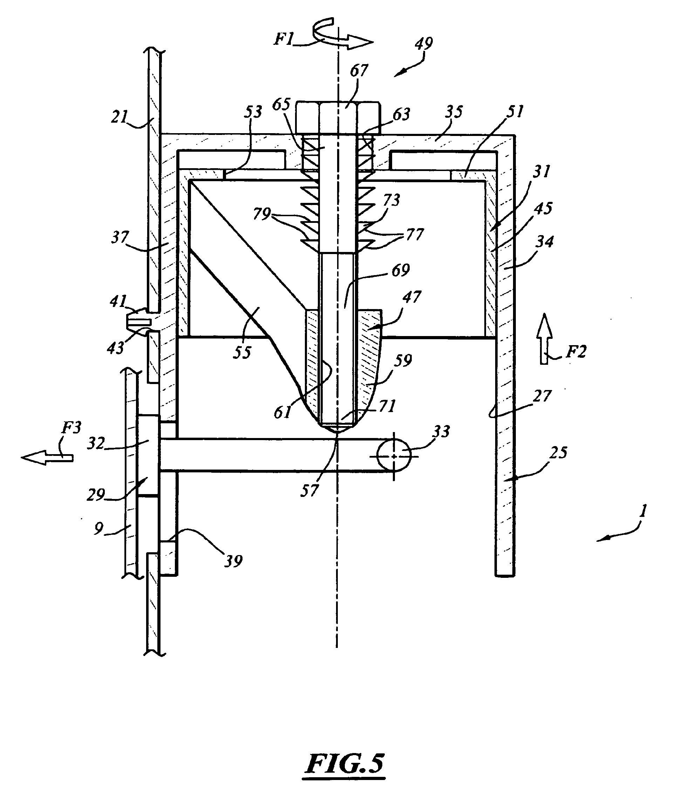

Les bouchons en matière plastique sont d'abord retirés des orifices 83. Puis, l'organe de blocage de chaque dispositif de fixation 1 est désengagé de la boucle 29. Dans ce but, un outil rotatif pourvu d'un embout de forme adaptée à la tête 67 est introduit dans les orifices 83 placés dans le prolongement de la vis du dispositif de fixation. L'outil rotatif est accouplé à la tête de la vis, et la vis est entraînée en rotation dans un sens adapté pour provoquer un engagement plus prononcé de la partie interne 69 de la vis dans le trou taraudé 61 du pêne (flèche F1 de la figure 5). La tête 67 de la vis vient d'abord porter contre le fond 35 de l'organe femelle, puis dans un deuxième temps l'organe de blocage se déplace vers l'extérieur du véhicule par rapport à l'organe femelle le long de la vis. Ce mouvement est symbolisé par la flèche F2 de la figure 5. Une fois le pêne de l'organe de blocage entièrement dégagé de la boucle, celle-ci est libre d'être dégagée de l'organe femelle à travers l'ouverture 39, selon un mouvement symbolisé par la flèche F3 de la figure 5.

Bien entendu, avant de pouvoir séparer complètement la planche de bord 3 de la caisse du véhicule, il est nécessaire de libérer l'organe mâle du dispositif de fixation 17 de l'organe femelle correspondant. Ceci peut être effectué par exemple en dévissant l'écrou 89 solidarisant l'organe mâle du dispositif 17 à la partie 15 de la liaison TIB (voir figure 1).

Le dispositif de fixation décrit ci-dessus présente de multiples avantages.

Du fait que le dispositif de fixation est dépourvu d'actionneur apte à déplacer l'organe de blocage depuis sa position d'attente jusqu'à sa position active, l'organe de blocage étant susceptible d'être déplacé de sa position d'attente jusqu'à sa position active par un actionneur disposé à l'extérieur de la cavité interne, le dispositif de fixation est beaucoup plus léger. Il comporte moins de pièces, il est donc plus simple et moins coûteux. La matière plastique surmoulée sur la vis permet de maintenir l'organe de blocage en place en position d'attente, et joue le rôle de moyen anti-retour, empêchant l'organe de blocage de revenir à sa position d'attente une fois qu'il a atteint sa position active.

Ces deux fonctions sont donc remplies de façon économique et simple. On notera que l'organe de blocage ne subit en position d'attente que des efforts assez faibles, de telle sorte qu'il n'est pas nécessaire de prévoir des moyens de verrouillage complexes.

La libération de l'organe mâle par rapport à l'organe femelle est réalisée facilement à partir du côté latéral du véhicule.

Le dispositif de fixation peut présenter de multiples variantes.

Il est adapté non seulement à la fixation d'une planche de bord sur la caisse du véhicule automobile, mais à la fixation d'autres sous ensemble tels qu'un siège sur la caisse, ou sur une autre partie du véhicule.

L'organe mâle peut être monté sur la caisse et l'organe femelle sur la planche de bord.

L'organe femelle n'est pas nécessairement orienté avec son axe central transversal, son axe central pouvant adopter toute orientation adéquate, verticale, longitudinale, oblique, etc.

La direction d'engagement de l'organe mâle dans l'organe femelle n'est pas nécessairement longitudinale mais peut être quelconque, par exemple transversale, verticale, oblique, etc.

L'organe de blocage se déplace de préférence en translation depuis sa position d'attente jusqu'à sa position active. Dans une variante de réalisation non préférée, l'organe de blocage pourrait se déplacer en rotation ou suivant une combinaison de translation et de rotation.

L'actionneur provoquant le déplacement de l'organe de blocage de sa positon d'attente à sa position active est de préférence un actionneur linéaire. Toutefois, en variante, cet actionneur pourrait être un actionneur rotatif. Dans ce cas, la partie externe de la vis ne comporte pas de surmoulage en matière plastique, mais porte un filetage de pas très fin. L'orifice 63 du fond de l'organe femelle dans lequel est engagée la partie externe de la vis, est taraudé. Le déplacement de l'organe de blocage de sa position d'attente à sa position active est provoqué en faisant tourner la vis. Du fait que le filet de la vis est très incliné, il faut exercer une force axiale très importante pour provoquer la rotation de la vis et son déplacement par rapport à l'organe femelle. De ce fait le filetage joue à la fois le rôle de moyen de freinage et le rôle de moyen anti-retour.

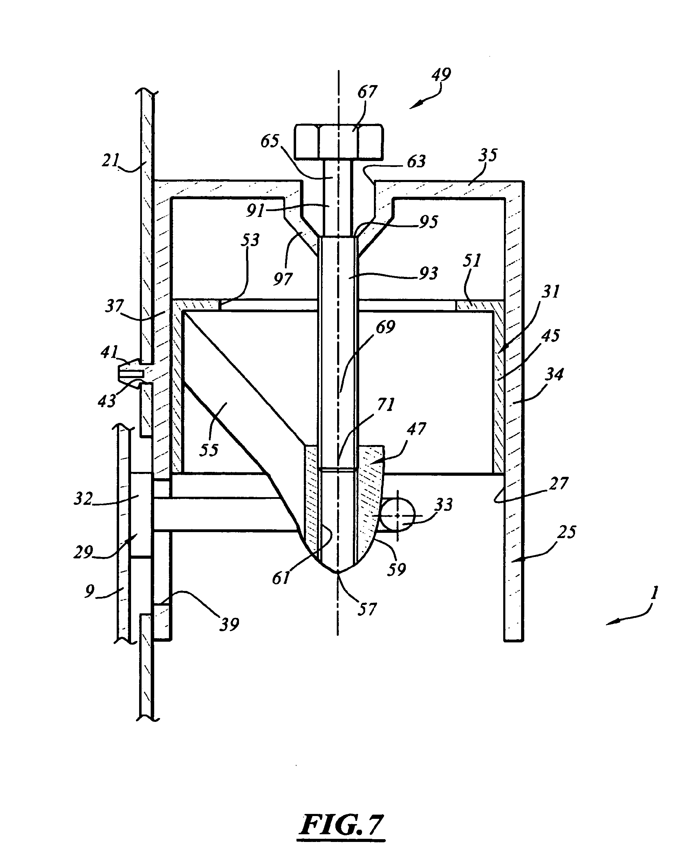

Les figures 7 à 9 illustrent un deuxième mode de réalisation de l'invention, pour lequel les éléments analogues au premier mode de réalisation décrit précédemment sont repérés par des références identiques.

Seuls les points pour lesquels le deuxième mode de réalisation diffère du premier seront décrits ci-dessous.

Selon le deuxième mode de réalisation, la vis 49 est uniquement métallique et ne comporte pas de matière plastique surmoulée autour de la partie externe 65.

La partie externe 65, visible sur la figure 7, comprend une partie 91 proximale de la tête 67 de la vis et une partie 93 distale de ladite tête 67. La partie distale 93 est filetée, son filetage étant identique au filetage de la partie interne 69 et prolongeant celui-ci de manière continue vers la tête 67.

La partie proximale 91 est de forme cylindrique et présente une surface extérieure lisse. Le diamètre extérieur de la partie proximale 91 est inférieur au diamètre extérieur de la partie distale 93, et également inférieur au diamètre minimal du filetage de la partie distale 93.

Un épaulement 95 est agencé dans la partie externe 65, comme représenté sur la figure 7. L'épaulement 95 est situé à la frontière entre la partie proximale 91 et la partie distale 93. L'épaulement 95 est formé de par la différence des diamètres extérieurs entre la partie distale 93 et la partie proximale 91. L'épaulement 95 est de révolution autour de l'axe central de l'enveloppe 34.

L'organe femelle 25 comporte des languettes 97 agencées à l'extrémité axiale de l'orifice 63 opposée à la tête 67 de la vis. Les languettes 97 sont, par exemple, venues de matière avec le fond 35 de l'enveloppe. Les languettes 97 sont inclinées par rapport à la direction de l'axe central de l'enveloppe 34. Elles s'étendent, à partir du bord de l'orifice 63, radialement vers l'axe central de l'enveloppe 34 et axialement vers l'intérieur de l'enveloppe 34. L'organe femelle 25 comprend, par exemple, deux languettes 97 diamétralement opposées par rapport à l'axe central de l'enveloppe 34. En variante, l'organe femelle 25 comprend plus de deux languettes 97, les languettes 97 étant sensiblement équi- réparties angulairement sur le cercle formé par l'extrémité de l'orifice 63 située à l'opposé de la tête 67.

Les languettes 97 sont réalisées en matière plastique et présentent une certaine élasticité. Les languettes 97 sont destinées à coopérer avec différentes parties de la vis 49.

Les languettes 97 sont destinées à être en appui contre le filetage de la partie interne 69 en position d'attente de l'organe de blocage 31. Les languettes 97 définissent ainsi des moyens de freinage aptes à maintenir l'organe de blocage 31 à sa position d'attente quand ledit organe de blocage 31 subit une sollicitation vers sa position active d'intensité inférieure ou égale à une limite prédéterminée et à autoriser un déplacement de l'organe de blocage 31 de sa position d'attente vers sa position active quand ledit organe de blocage 31 subit une sollicitation vers sa position active d'intensité supérieure à ladite limite prédéterminée.

Les languettes 97 sont également destinées à coopérer avec le filetage de la partie distale 93 en position active de l'organe de blocage 31, définissant des moyens anti-retour aptes à bloquer le déplacement de l'organe de blocage 31 depuis sa position active vers sa position d'attente.

Les languettes 97 sont également destinées à être en appui axialement contre l'épaulement 95 lorsque la tête 67 de la vis est en contact avec le fond 35 de l'enveloppe.

Le fonctionnement de ce deuxième mode de réalisation est identique à celui du premier mode de réalisation en ce qui concerne le procédé de fixation initiale de la planche de bord 3 sur la caisse du véhicule et le procédé de démontage de la planche de bord 3 de ladite caisse du véhicule. Les languettes 97 définissent en particulier les moyens de freinage aptes à maintenir l'organe de blocale 31 à sa position d'attente, ainsi que les moyens anti-retour aptes à bloquer le déplacement de l'organe de blocage 31 depuis sa position active vers sa position d'attente, de manière analogue aux collerettes 75 de l'invention selon le premier mode de réalisation.

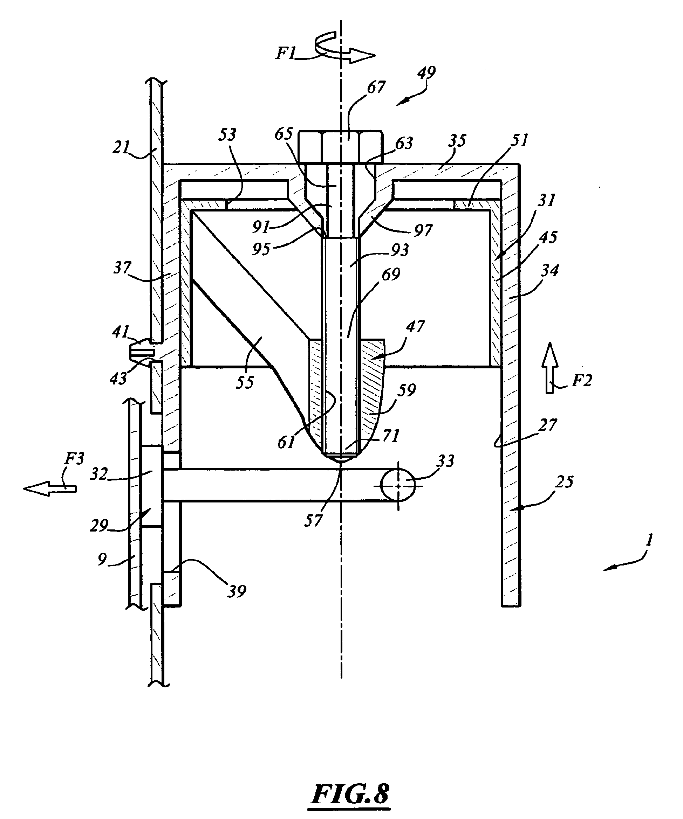

Lors du démontage de la planche de bord 3 de la caisse du véhicule, l'opérateur exerce une rotation de la tête 67 selon la flèche F1 (figure 8), à l'aide du deuxième actionneur rotatif. Cette rotation de la tête 67 entraîne le vissage du filetage de la partie interne 69 dans le taraudage du trou 61. Ce vissage engendre lui-même une translation axiale de la vis 49 jusqu'au contact de la tête 67 contre le fond 35. Lors de cette translation de la vis 49, les languettes 97 passent d'un appui latéral contre le filetage de la partie distale 93 en position active de l'organe de blocage 31, à un appui axial contre l'épaulement 95 de la vis.

Le procédé de remontage de la planche de bord 3 sur la caisse du véhicule selon le deuxième mode de réalisation va maintenant être détaillé à l'aide des figues 8 et 9.

Initialement, l'organe de blocage 31 est en position d'attente et la tête 67 est en contact avec le fond 35 de l'enveloppe, de sorte que le filetage de la partie interne 69 est en majeure partie reçu dans le taraudage du trou 61, comme représenté sur la figure 8. Dans cette position l'organe mâle 29 est libre par rapport à l'organe femelle 25.

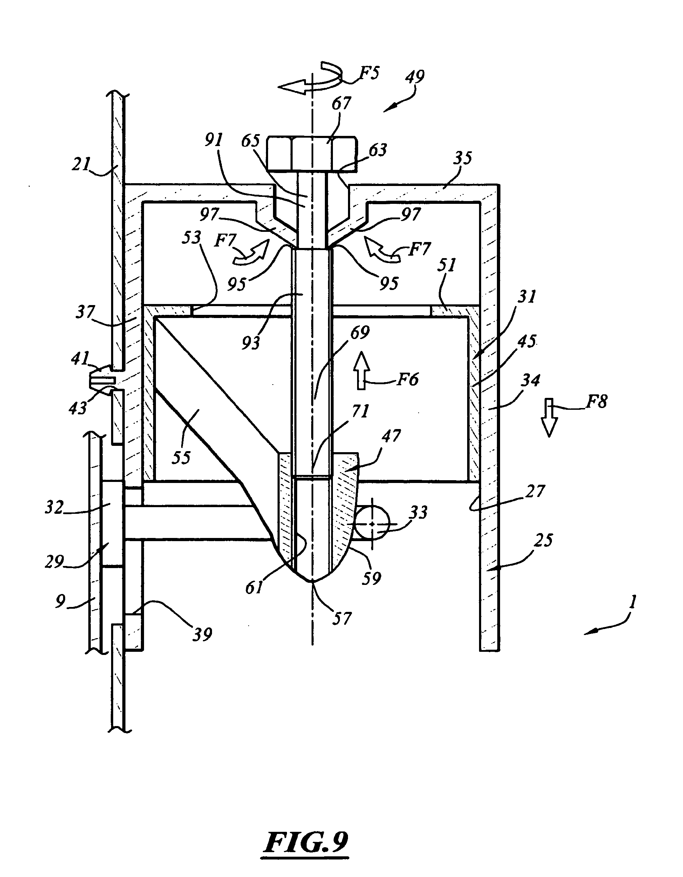

Un opérateur commence alors par agir à l'aide d'un deuxième actionneur rotatif, non représenté, sur la tête 67 de la vis 49 dans le sens de la flèche F5 visible sur la figure 9. Lors de cette étape, les languettes 97 sont uniquement en appui contre l'épaulement 95. La résistance élastique de la matière plastique des languettes 97 dans cette position étant inférieure à la force de frottement entre la partie de guidage 45 de l'organe de blocage et l'enveloppe 34 de l'organe femelle, la rotation de la vis 49 dans le sens de la flèche F5 entraîne dans un premier temps l'écartement de la tête 67 de la vis du fond 35 (flèche F6). La translation de la vis 49 selon la flèche F6 est due au dévissage du filetage de la partie interne 69 par rapport au taraudage du trou 61.

L'épaulement 95 étant en appui contre les languettes 97, la translation de la vis 49 selon la direction de l'axe central de l'enveloppe 34 dans le sens de la flèche F6 entraîne une flexion des languettes 97, augmentant ainsi leur inclinaison par rapport à l'axe central de l'enveloppe 34, comme représenté par les flèches F7.

La flexion des languettes 97 a pour effet d'augmenter la force d'appui des languettes contre l'épaulement 95. La translation de la vis 49 selon la flèche F6 est arrêtée lorsque la force d'appui des languettes 97 contre l'épaulement 95 est supérieure à la force de frottement entre la partie de guidage 45 et l'enveloppe 34.

Lors de l'étape suivante de ce procédé de remontage, l'opérateur continue de faire tourner la tête 67 de la vis par rapport à l'axe central de l'enveloppe 34 dans le sens de la flèche F5 à l'aide du deuxième actionneur rotatif. La vis 49 est alors mobile uniquement en rotation autour de l'axe central de l'enveloppe 34, la translation selon la flèche F6 étant arrêtée. La rotation de la tête 67 de la vis selon la flèche F5 entraîne toujours le dévissage du filetage de la partie interne 69 par rapport au taraudage du trou 61. La force d'appui des languettes 97 contre l'épaulement 95 étant supérieure à la force de frottement de la partie de guidage 45 contre l'enveloppe 34, la translation du pêne 47 de l'organe de blocage par rapport à la vis 49 due au dévissage de la partie interne 69 par rapport au trou 61, entraîne une translation de l'organe de blocage 31 par rapport à l'organe femelle 25 de sa position d'attente vers sa position active (flèche F8). L'opérateur arrête alors d'entraîner en rotation la tête 67 selon la flèche F5 lorsque l'organe de blocage 31 est en position active, comme représenté sur la figure 9. L'opérateur achève ainsi le procédé de remontage de la planche de bord 3 sur la caisse du véhicule.

Pour démonter à nouveau la planche de bord 3 de la caisse du véhicule, l'opérateur exerce une rotation de la tête 67 de la vis selon la flèche F1, visible sur la figure 8, à l'aide du deuxième actionneur rotatif. Cette rotation de la tête 67 dans le sens de la flèche F1 entraîne le vissage du filetage de la partie interne 69 dans le taraudage du trou 61. Ce vissage de la partie interne 69 par rapport au trou 61 engendre lui-même une translation de la vis 49 selon l'axe central de l'enveloppe 34 dans le sens opposé à celui de la flèche F6, visible sur la figure 9, jusqu'au contact de la tête 67 contre le fond 35. Lorsque la tête 67 est au contact du fond 35, la poursuite du vissage de la partie interne 69 par rapport au trou 61 entraîne une translation de l'organe de blocage 31 de sa position active vers sa position d'attente par rapport à l'organe femelle 25, comme représenté par la flèche F2 de la figure 8.

L'invention selon le deuxième mode de réalisation permet ainsi d'améliorer le remontage de la planche de bord 3 sur la caisse du véhicule en service après-vente, puisqu'il n'est pas nécessaire d'utiliser dans ce cas le premier actionneur linéaire 85.

En variante, dans le cas d'un actionneur linéaire, la partie externe de la vis ne comporte pas de surmoulage en matière plastique, mais porte un filetage de pas très fin.

En variante, les languettes 97 sont réalisées avec une pièce en métal surmoulée.

Selon un deuxième aspect de l'invention, indépendant du premier aspect de l'invention qui a été décrit précédemment, le dispositif de fixation d'un premier sous-ensemble structurel ou fonctionnel à un second sous-ensemble structurel ou fonctionnel d'un véhicule automobile, comprend :
- un organe femelle lié au second sous-ensemble et définissant intérieurement une cavité interne ;
- un organe mâle lié au premier sous-ensemble, l'organe mâle étant susceptible de s'engager dans la cavité interne de l'organe femelle suivant une direction d'engagement ;
- un organe de blocage, mobile par rapport à l'organe femelle à l'intérieur de la cavité interne, entre une position d'attente dans laquelle l'organe de blocage autorise l'engagement de l'organe mâle dans l'organe femelle suivant la direction d'engagement, et une position active dans laquelle l'organe de blocage coopère avec l'organe mâle en vue de bloquer l'organe mâle par rapport à l'organe femelle, au moins selon la direction d'engagement ;
- un organe de transmission ayant une partie interne disposée dans la cavité interne et liée à l'organe de blocage, et une tête disposée à l'extérieur de la cavité interne et susceptible de coopérer avec un actionneur rotatif, l'organe de transmission ayant au moins un degré de liberté par rapport à l'organe femelle.

Le dispositif de fixation est caractérisé en ce que l'organe femelle comporte des languettes destinées à coopérer avec l'organe de transmission, et en ce que l'organe de transmission comporte une partie externe placée à l'extérieur de la cavité interne et un épaulement agencé dans la partie externe et propre à être en appui contre les languettes, l'organe de blocage étant susceptible d'être déplacé de sa position d'attente jusqu'à sa position active par un actionneur rotatif propre à agir sur la tête de l'organe de transmission de manière à faire tourner l'organe de transmission par rapport à l'organe de blocage dans un sens provoquant le déplacement de l'organe de blocage par rapport à l'organe femelle le long de l'organe de transmission depuis sa position d'attente vers sa position active, l'épaulement de la partie externe étant en appui contre les languettes au cours d'au moins une partie dudit déplacement de l'organe de blocage.

## Revendications

1. Dispositif de fixation (1) d'un premier sous-ensemble structurel ou fonctionnel (3) à un second sous-ensemble structurel ou fonctionnel (7) d'un véhicule automobile, le dispositif de fixation (1) comprenant :
- un organe femelle (25) lié au second sous-ensemble (7) et définissant intérieurement une cavité interne (27) :
- un organe mâle (29) lié au premier sous-ensemble (3), l'organe mâle (29) étant susceptible de s'engager dans la cavité interne (27) de l'organe femelle (25) suivant une direction d'engagement ;
- un organe de blocage (31) mobile par rapport à l'organe femelle (25) à l'intérieur de la cavité interne (27), entre une position d'attente dans laquelle l'organe de blocage (31) autorise l'engagement de l'organe mâle (29) dans l'organe femelle (25) suivant la direction d'engagement, et une position active dans laquelle l'organe de blocage (31) coopère avec l'organe mâle (29) en vue de bloquer l'organe mâle (29) par rapport à l'organe femelle (25) au moins selon la direction d'engagement,
le dispositif de fixation étant dépourvu d'actionneur apte à déplacer l'organe de blocage (31) depuis sa position d'attente jusqu'à sa position active,
**caractérisé en ce que** l'organe de blocage (31) estsusceptible d'être déplacé de sa position d'attente jusqu'à sa position active par un vérin pneumatique ou hydraulique (85) disposé à l'extérieur de la cavité interne (27).

2. Dispositif de fixation selon la revendication 1, **caractérisé en ce qu'**il est prévu pour fixer le premier sous-ensemble (3) à une position d'usage prédéterminée par rapport au second sous-ensemble (7), le premier sous-ensemble (3) étant susceptible d'être déplacé jusqu'à la position d'usage par un préhenseur, l'organe de blocage étant susceptible d'être déplacé de sa position d'attente jusqu'à sa position active par un vérin pneumatique ou hydraulique (85) lié au préhenseur.

3. Dispositif de fixation selon la revendication 1 ou 2, **caractérisé en ce qu'**il comprend des moyens de freinage (75, 97) aptes à maintenir l'organe de blocage (31) à sa position d'attente quand ledit organe de blocage (31) subit une sollicitation vers sa position active d'intensité inférieure ou égale à une limite prédéterminée et à autoriser un déplacement de l'organe de blocage (31) de sa position d'attente vers sa position active quand ledit organe de blocage (31) subit une sollicitation vers sa position active d'intensité supérieure à ladite limite prédéterminée.

4. Dispositif de fixation selon l'une quelconque des revendications 1 à 3, **caractérisé en ce qu'**il comprend des moyens anti-retour (75, 97) aptes à bloquer le déplacement de l'organe de blocage (31) depuis sa position active vers sa position d'attente.

5. Dispositif de fixation selon l'une quelconque des revendications 1 à 4, **caractérisé en ce qu'**il comprend un organe de transmission (49) ayant une partie interne (69) disposée dans la cavité interne (27) et liée à l'organe de blocage (31), et une tête (67) disposée à l'extérieur de la cavité interne (27) et susceptible de coopérer avec le vérin pneumatique ou hydraulique (85), l'organe de transmission (49) ayant au moins un degré de liberté par rapport à l'organe femelle (25).

6. Dispositif de fixation selon la revendication 5, **caractérisé en ce que** l'organe de transmission (49) est une vis dont la partie interne (69) comporte une zone filetée, l'organe de blocage (31) comportant un trou taraudé (61) dans lequel la zone filetée est engagée, de manière à permettre un déplacement de l'organe de blocage (31) par rapport à l'organe femelle (25) le long de la vis (49) sous l'effet d'une rotation de la vis (49) par rapport à l'organe de blocage (31).

7. Dispositif de fixation selon la revendication 5 ou 6, **caractérisé en ce que** l'organe de transmission (49) comporte une partie externe (65) placée à l'extérieur de la cavité interne (27) et une matière plastique (73) surmoulée sur la partie externe (65), la matière plastique (73) définissant des moyens de freinage aptes à maintenir l'organe de blocage (31) à sa position d'attente quand ledit organe de blocage (31) subit une sollicitation vers sa position active d'intensité inférieure ou égale à une limite prédéterminée et à autoriser un déplacement de l'organe de blocage (31) de sa position d'attente vers sa position active quand ledit organe de blocage (31) subit une sollicitation vers sa position active d'intensité supérieure à ladite limite prédéterminée.

8. Dispositif de fixation selon la revendication 7, **caractérisé en ce que** le surmoulage en matière plastique (73) définit des moyens anti-retour aptes à bloquer le déplacement de l'organe de blocage (31) depuis sa position active vers sa position d'attente.

9. Dispositif de fixation selon la revendication 5 ou 6, **caractérisé en ce que** l'organe femelle (25) comporte des languettes (97) destinées à coopérer avec l'organe de transmission (49) et définissant des moyens de freinage aptes à maintenir l'organe de blocage (31) à sa position d'attente quand ledit organe de blocage (31) subit une sollicitation vers sa position active d'intensité inférieure ou égale à une limite prédéterminée et à autoriser un déplacement de l'organe de blocage (31) de sa position d'attente vers sa position active quand ledit organe de blocage (31) subit une sollicitation vers sa position active d'intensité supérieure à ladite limite prédéterminée.

10. Dispositif de fixation selon la revendication 9, **caractérisé en ce que** les languettes (97) définissent des moyens anti-retour aptes à bloquer le déplacement de l'organe de blocage (31) depuis sa position active vers sa position d'attente.

11. Dispositif de fixation selon la revendication 9 ou 10, **caractérisé en ce que** l'organe de transmission (49) comporte une partie externe (65) placée à l'extérieur de la cavité interne (27) et un épaulement (95) agencé dans la partie externe (65) et propre à être en appui contre les languettes (97), l'organe de blocage (31) étant susceptible d'être déplacé de sa position d'attente jusqu'à sa position active par un deuxième actionneur rotatif propre à agir sur la tête (67) de l'organe de transmission (49) de manière à faire tourner l'organe de transmission (49) par rapport à l'organe de blocage (31) dans un sens provoquant le déplacement de l'organe de blocage (31) par rapport à l'organe femelle (25) le long de l'organe de transmission (49) depuis sa position d'attente vers sa position active, l'épaulement (95) de la partie externe (65) étant en appui contre les languettes (97) au cours d'au moins une partie dudit déplacement de l'organe de blocage (31).

12. Procédé de fixation d'un premier sous-ensemble structurel ou fonctionnel (3) à un second sous-ensemble structurel ou fonctionnel (7) d'un véhicule automobile à l'aide d'un dispositif de fixation (1) selon l'une quelconque des revendications 1 à 11, le procédé comprenant les étapes suivantes :
- déplacement du premier sous-ensemble (3) jusqu'à une position d'usage prédéterminée par rapport au second sous-ensemble (7) à l'aide d'un préhenseur ;
- engagement de l'organe mâle (29) dans la cavité interne (27) de l'organe femelle (25) ;
- déplacement de l'organe de blocage (31) par rapport à l'organe femelle (25) à l'intérieur de la cavité interne (27) depuis sa position d'attente jusqu'à sa position active à l'aide d'un actionneur (85) lié au préhenseur.

13. Procédé de démontage d'un premier sous-ensemble structurel ou fonctionnel (3) fixé à un second sous-ensemble structurel ou fonctionnel (7) d'un véhicule automobile à l'aide d'un dispositif de fixation (1) selon la revendication 6, le procédé comprenant une étape au cours de laquelle on agit sur la tête (67) de l'organe de transmission (49) de manière à faire tourner l'organe de transmission (49) par rapport à l'organe de blocage (31) dans un sens provoquant le déplacement de l'organe de blocage (31) par rapport à l'organe femelle (25) le long de l'organe de transmission (49) depuis sa position active vers sa position d'attente.

14. Procédé de remontage d'un premier sous-ensemble structurel ou fonctionnel (3) fixé à un second sous-ensemble structurel ou fonctionnel (7) d'un véhicule automobile à l'aide d'un dispositif de fixation (1) selon la revendication 11, le procédé comprenant une étape au cours de laquelle on agit sur la tête (67) de l'organe de transmission (49) de manière à faire tourner l'organe de transmission (49) par rapport à l'organe de blocage (31) dans un sens provoquant le déplacement de l'organe de blocage (31) par rapport à l'organe femelle (25) le long de l'organe de transmission (49) depuis sa position d'attente vers sa position active, l'épaulement (95) de la partie externe (65) de l'organe de transmission (49) étant en appui contre les languettes (97) de l'organe femelle (25) pendant au moins une partie du déplacement de l'organe de blocage (31).

15. Ensemble de fixation d'un premier sous-ensemble structurel ou fonctionnel (3) à un second sous-ensemble structurel ou fonctionnel (7) d'un véhicule automobile, l'ensemble de fixation comprenant :
- un dispositif de fixation (1) prévu pour fixer le premier sous-ensemble (3) à une position d'usage prédéterminée par rapport au second sous-ensemble (7) ;
- un préhenseur apte à déplacer le premier sous-ensemble (3) jusqu'à la position d'usage ;
- un actionneur (85) lié au préhenseur ;
le dispositif de fixation comprenant :
- un organe femelle (25) lié au second sous-ensemble (7) et définissant intérieurement une cavité interne (27) ;
- un organe mâle (29) lié au premier sous-ensemble (3), l'organe mâle (29) étant susceptible de s'engager dans la cavité interne (27) de l'organe femelle (25) suivant une direction d'engagement ;
- un organe de blocage (31) mobile par rapport à l'organe femelle (25) à l'intérieur de la cavité interne (27), entre une position d'attente dans laquelle l'organe de blocage (31) autorise l'engagement de l'organe mâle (29) dans l'organe femelle (25) suivant la direction d'engagement, et une position active dans laquelle l'organe de blocage (31) coopère avec l'organe mâle (29) en vue de bloquer l'organe mâle (29) par rapport à l'organe femelle (25) au moins selon la direction d'engagement,
l'organe de blocage (31) étant susceptible d'être déplacé de sa position d'attente jusqu'à sa position active par l'actionneur (85).

16. Véhicule automobile comprenant :
- une caisse ;
- une planche de bord (3) comprenant une traverse transversale (5) ;
- au moins deux dispositifs de fixation (1) selon la revendication 6, les dispositifs de fixation (1) fixant rigidement deux extrémités opposées de la traverse (5) à des éléments rigides (7) de la caisse ;
la caisse comprenant des côtés de caisse (19) disposés latéralement vers l'extérieur du véhicule par rapport auxdits éléments rigides (7), les côtés de caisses comportant des orifices traversants (83) permettant l'accès aux têtes (67) des vis (49) des dispositifs de fixation (1).

## Claims

1. Device (1) for attaching a first structural or functional sub-assembly (3) to a second structural or functional sub-assembly (7) of a motor vehicle, the attachment device (1) comprising:
- a female member (25) which is connected to the second sub-assembly (7) and defines an inner cavity (27) on the inside;
- a male member (29) connected to the first sub-assembly (3), the male member (29) being capable of insertion into the inner cavity (27) of the female member (25) in an insertion direction;
- a blocking member (31) which is movable relative to the female member (25), inside the inner cavity (27), between a rest position, in which the blocking member (31) allows the male member (29) to be inserted into the female member (25) in the insertion direction, and an operative position, in which the blocking member (31) cooperates with the male member (29) in order to block the male member (29) relative to the female member (25) at least in the insertion direction,
the attachment device not having an actuator capable of moving the blocking member (31) from its rest position to its operative position, **characterized in that** the blocking member (31) is movable from its rest position to its operative position by an pneumatic or hydraulic jack (85) arranged outside the inner cavity (27).

2. Attachment device according to claim 1, **characterized in that** it is arranged to attach the first sub-assembly (3) in a predetermined use position relative to the second sub-assembly (7), the first sub-assembly (3) being movable to the use position by a gripper, the blocking member being movable from its rest position to its operative position by a a pneumatic or hydraulic jack (85) connected to the gripper.

3. Attachment device according to claim 1 or 2, **characterized in that** it comprises braking means (75, 97) capable of holding the blocking member (31) in its rest position when said blocking member (31) is urged towards its operative position with a degree of intensity less than or equal to a predetermined limit, and of allowing the blocking member (31) to move from its rest position towards its operative position when said blocking member (31) is urged towards its operative position with a degree of intensity greater than said predetermined limit.

4. Attachment device according to any one of claims 1 to 3, **characterized in that** it comprises anti-return means (75, 97) capable of blocking the movement of the blocking member (31) from its operative position towards its rest position.

5. Attachment device according to any one of claims 1 to 4, **characterized in that** it comprises a transmission member (49) having an inner portion (69), which is arranged in the inner cavity (27) and is connected to the blocking member (31), and a head (67), which is arranged outside the inner cavity (27) and is capable of cooperating with the pneumatic or hydraulic jack (85), the transmission member (49) having at least one degree of freedom relative to the female member (25).

6. Attachment device according to claim 5, **characterized in that** the transmission member (49) is a screw, the inner portion (69) of which comprises a threaded zone, the blocking member (31) comprising a tapped hole (61) in which the threaded zone is engaged so as to allow the blocking member (31) to move relative to the female member (25) along the screw (49) under the effect of the rotation of the screw (49) relative to the blocking member (31).

7. Attachment device according to claim 5 or 6, **characterized in that** the transmission member (49) comprises an outer portion (65), which is located outside the inner cavity (27), and a plastics material (73) overmoulded on the outer portion (65), the plastic material (73) defining braking means capable of holding the blocking member (31) in its rest position when said blocking member (31) is urged towards its operative position with a degree of intensity less than or equal to a predetermined limit, and of allowing the blocking member (31) to move from its rest position towards its operative position when said blocking member (31) is urged towards its operative position with a degree of intensity greater than said predetermined limit.

8. Attachment device according to claim 7, **characterized in that** the overmoulding of plastics material (73) defines anti-return means capable of blocking the movement of the blocking member (31) from its operative position towards its rest position.

9. Attachment device according to claim 5 or 6, **characterized in that** the female member (25) comprises tongues (97) which are arranged to cooperate with the transmission member (49) and define braking means capable of holding the blocking member (31) in its rest position when said blocking member (31) is urged towards its operative position with a degree of intensity less than or equal to a predetermined limit, and of allowing the blocking member (31) to move from its rest position towards its operative position when said blocking member (31) is urged towards its operative position with a degree of intensity greater than said predetermined limit.

10. Attachment device according to claim 9, **characterized in that** the tongues (97) define anti-return means capable of blocking the movement of the blocking member (31) from its operative position towards its rest position.

11. Attachment device according to claim 9 or 10, **characterized in that** the transmission member (49) comprises an outer portion (65), which is located outside the inner cavity (27), and a shoulder (95), which is formed in the outer portion (65) and is capable of abutment against the tongues (97), the blocking member (31) being movable from its rest position to its operative position by a second rotary actuator capable of acting upon the head (67) of the transmission member (49) so as to cause the transmission member (49) to rotate relative to the blocking member (31) in a direction effecting movement of the blocking member (31) relative to the female member (25) along the transmission member (49) from its rest position towards its operative position, the shoulder (95) of the outer portion (65) being in abutment against the tongues (97) during at least part of said movement of the blocking member (31).

12. Process for attaching a first structural or functional sub-assembly (3) to a second structural or functional sub-assembly (7) of a motor vehicle with the aid of an attachment device (1) according to any one of claims 1 to 11, the process comprising the following steps:
- movement of the first sub-assembly (3) to a predetermined use position relative to the second sub-assembly (7) with the aid of a gripper;
- insertion of the male member (29) into the inner cavity (27) of the female member (25);
- movement of the blocking member (31) relative to the female member (25), inside the inner cavity (27), from its rest position to its operative position with the aid of an actuator (85) connected to the gripper.

13. Process for dismantling a first structural or functional sub-assembly (3) attached to a second structural or functional sub-assembly (7) of a motor vehicle with the aid of an attachment device (1) according to claim 6, the process comprising a step in which the head (67) of the transmission member (49) is acted upon so as to cause the transmission member (49) to rotate relative to the blocking member (31) in a direction effecting movement of the blocking member (31) relative to the female member (25) along the transmission member (49) from its operative position towards its rest position.

14. Process for re-mounting a first structural or functional sub-assembly (3) attached to a second structural or functional sub-assembly (7) of a motor vehicle with the aid of an attachment device (1) according to claim 11, the process comprising a step in which the head (67) of the transmission member (49) is acted upon so as to cause the transmission member (49) to rotate relative to the blocking member (31) in a direction effecting movement of the blocking member (31) relative to the female member (25) along the transmission member (49) from its rest position towards its operative position, the shoulder (95) of the outer portion (65) of the transmission member (49) being in abutment against the tongues (97) of the female member (25) during at least part of the movement of the blocking member (31).

15. Assembly for attaching a first structural or functional sub-assembly (3) to a second structural or functional sub-assembly (7) of a motor vehicle, the attachment assembly comprising:
- an attachment device (1) arranged to attach the first sub-assembly (3) in a predetermined use position relative to the second sub-assembly (7);
- a gripper capable of moving the first sub-assembly (3) to the use position;
- an actuator (85) connected to the gripper;
the attachment device comprising:
- a female member (25) which is connected to the second sub-assembly (7) and defines an inner cavity (27) on the inside;
- a male member (29) connected to the first sub-assembly (3), the male member (29) being capable of insertion into the inner cavity (27) of the female member (25) in an insertion direction;
- a blocking member (31) which is movable relative to the female member (25), inside the inner cavity (27), between a rest position, in which the blocking member (31) allows the male member (29) to be inserted into the female member (25) in the insertion direction, and an operative position, in which the blocking member (31) cooperates with the male member (29) in order to block the male member (29) relative to the female member (25) at least in the insertion direction,
the blocking member (31) being movable from its rest position to its operative position by the actuator (85).

16. Motor vehicle comprising:
- a body;
- a dashboard (3) having a transverse cross-member (5);
- at least two attachment devices (1) according to claim 6, the attachment devices (1) rigidly attaching two opposite ends of the cross-member (5) to rigid elements (7) of the body;
the body having body sides (19) which are arranged laterally towards the outside of the vehicle relative to said rigid elements (7), the body sides having through-orifices (83) allowing access to the heads (67) of the screws (49) of the attachment devices (1).

## Patentansprüche

1. Vorrichtung (1) zur Befestigung einer ersten strukturellen oder funktionellen Baugruppe (3) an einer zweiten strukturellen oder funktionellen Baugruppe (7) in einem Kraftfahrzeug, wobei die Befestigungsvorrichtung (1) umfasst:
- ein Aufnahmeelement (25), das mit der zweiten Baugruppe (7) verbunden ist und innen einen Innenhohlraum (27) definiert;
- ein Einsteckelement (29), das mit der ersten Baugruppe (3) verbunden ist, wobei das Einsteckelement (29) geeignet ist, in den Innenhohlraum (27) des Aufnahmeelements (25) in eine Einsteckrichtung einzugreifen;
- ein Feststellelement (31), das in Bezug zum Aufnahmeelement (25) im Inneren des Innenhohlraums (27) zwischen einer Warteposition, in der das Feststellelement (31) das Einstecken des Einsteckelements (29) in das Aufnahmeelement (25) in die Einsteckrichtung gestattet, und einer aktiven Position, in der das Feststellelement (31) mit dem Einsteckelement (29) zusammenwirkt, um das Einsteckelement (29) in Bezug zum Aufnahmeelement (25) mindestens in Einsteckrichtung festzustellen, beweglich ist,
wobei die Befestigungsvorrichtung kein Betätigungselement umfasst, das geeignet ist, das Feststellelement (31) von seiner Warteposition in seine aktive Position zu verschieben,
**dadurch gekennzeichnet, dass** das Feststellelement (31) geeignet ist, von seiner Warteposition in seine aktive Position durch einen Druckluft- oder Hydraulikzylinder (85), der außerhalb des Innenhohlraums (27) angeordnet ist, verschoben zu werden.

2. Befestigungsvorrichtung nach Anspruch 1, **dadurch gekennzeichnet, dass** sie dazu vorgesehen ist, die erste Baugruppe (3) in einer vorbestimmten Nutzungsposition in Bezug zur zweiten Baugruppe (7) zu befestigen, wobei die erste Baugruppe (3) geeignet ist, in die Nutzungsposition durch ein Greifelement verschoben zu werden, wobei das Feststellelement geeignet ist, von seiner Warteposition in seine aktive Position durch einen Druckluft- oder Hydraulikzylinder (85), der mit dem Greifelement verbunden ist, verschoben zu werden.

3. Befestigungsvorrichtung nach Anspruch 1 oder 2, **dadurch gekennzeichnet, dass** sie Bremsmittel (75, 97) umfasst, die geeignet sind, das Feststellelement (31) in seiner Warteposition zu halten, wenn des Feststellelement (31) mit geringerer oder gleicher Heftigkeit wie eine vorbestimmte Grenze in seine aktive Position gedrückt wird, und eine Verschiebung des Feststellelements (31) von seiner Warteposition in seine aktive Position zu gestatten, wenn das Feststellelement (31) mit größerer Heftigkeit als die vorbestimmte Grenze in seine aktive Position gedrückt wird.

4. Befestigungsvorrichtung nach einem der Ansprüche 1 bis 3, **dadurch gekennzeichnet, dass** es Rückschlagmittel (75, 97) umfasst, die geeignet sind, die Verschiebung des Feststellelements (31) von seiner aktiven Position in seine Warteposition zu blockieren.

5. Befestigungsvorrichtung nach einem der Ansprüche 1 bis 4, **dadurch gekennzeichnet, dass** es ein Übertragungselement (49) umfasst, das einen inneren Teil (69), der im Innenhohlraum (27) angeordnet und mit dem Feststellelement (31) verbunden ist, und einen Kopf (67) umfasst, der außerhalb des Innenhohlraums (27) angeordnet ist und mit dem Druckluft- oder Hydraulikzylinder (85) zusammenwirken kann, wobei das Übertragungselement (49) mindestens einen Freiheitsgrad in Bezug zum Aufnahmeelement (25) aufweist.

6. Befestigungsvorrichtung nach Anspruch 5, **dadurch gekennzeichnet, dass** das Übertragungselement (49) eine Schraube ist, deren innerer Teil (69) eine Gewindezone umfasst, wobei das Feststellelement (31) ein Gewindeloch (61) umfasst, in das die Gewindezone eingreift, um eine Verschiebung des Feststellelements (31) in Bezug zum Aufnahmeelement (25) entlang der Schraube (49) unter der Wirkung einer Drehung der Schraube (49) in Bezug zum Feststellelement (31) zu ermöglichen.

7. Befestigungsvorrichtung nach Anspruch 5 oder 6, **dadurch gekennzeichnet, dass** das Übertragungselement (49) einen externen Teil (65), der außerhalb des Innenhohlraums (27) angeordnet ist, und einen Kunststoff (73) umfasst, der auf den externen Teil (65) aufgeformt ist, wobei der Kunststoff (73) Bremsmittel definiert, die geeignet sind, das Feststellelement (31) in seiner Warteposition zu halten, wenn das Feststellelement (31) mit geringerer oder gleicher Heftigkeit wie eine vorbestimmte Grenze in seine aktive Position gedrückt wird, und eine Verschiebung des Feststellelements (31) von seiner Warteposition in seine aktive Position zu gestatten, wenn das Feststellelement (31) mit größerer Heftigkeit als die vorbestimmte Grenze in seine aktive Position gedrückt wird.

8. Befestigungsvorrichtung nach Anspruch 7, **dadurch gekennzeichnet, dass** die Aufformung (73) aus Kunststoff Rückschlagmittel definiert, die geeignet sind, die Verschiebung des Feststellelements (31) von seiner aktiven Position in seine Warteposition zu blockieren.

9. Befestigungsvorrichtung nach Anspruch 5 oder 6, **dadurch gekennzeichnet, dass** das Aufnahmeelement (25) Laschen (97) umfasst, die dazu bestimmt sind, mit dem Übertragungselement (49) zusammenzuwirken, und Bremsmittel definieren, die geeignet sind, das Feststellelement (31) in seiner Warteposition zu halten, wenn das Feststellelement (31) mit geringerer oder gleicher Heftigkeit wie eine vorbestimmte Grenze in seine aktive Position gedrückt wird, und eine Verschiebung des Feststellelements (31) von seiner Warteposition in seine aktive Position zu gestatten, wenn das Feststellelement (31) mit größerer Heftigkeit als die vorbestimmte Grenze in seine aktive Position gedrückt wird.

10. Befestigungsvorrichtung nach Anspruch 9, **dadurch gekennzeichnet, dass** die Laschen (97) Rückschlagmittel definieren, die geeignet sind, die Verschiebung des Feststellelements (31) von seiner aktiven Position in seine Warteposition zu blockieren.

11. Befestigungsvorrichtung nach Anspruch 9 oder 10, **dadurch gekennzeichnet, dass** das Übertragungselement (49) einen externen Teil (65), der außerhalb des Innenhohlraums (27) angeordnet ist, und einen Absatz (95) umfasst, der in dem externen Teil (65) angeordnet und geeignet ist, an den Laschen (97) zur Anlage zu gelangen, wobei das Feststellelement (31) von seiner Warteposition in seine aktive Position durch ein zweites drehbares Betätigungselement verschoben werden kann, welches auf den Kopf (67) des Übertragungselements (49) einwirken kann, um das Übertragungselement (49) in Bezug zum Feststellelement (31) in eine Richtung zu drehen, wodurch die Verschiebung des Feststellelements (31) in Bezug zum Aufnahmeelement (25) entlang des Übertragungselements (49) von seiner Warteposition in seine aktive Position hervorgerufen wird, wobei der Absatz (95) des externen Teils (65) an den Laschen (97) zumindest während eines Teils der Verschiebung des Feststellelements (31) anliegt.

12. Verfahren zur Befestigung einer ersten strukturellen oder funktionellen Baugruppe (3) an einer zweiten strukturellen oder funktionellen Baugruppe (7) in einem Kraftfahrzeug mit Hilfe einer Befestigungsvorrichtung (1) nach einem der Ansprüche 1 bis 11, wobei das Verfahren die folgenden Schritte umfasst:
- Verschieben der ersten Baugruppe (3) in eine vorbestimmte Verwendungsposition in Bezug zur zweiten Baugruppe (7) mit Hilfe eines Greifelements;
- Einstecken des Einsteckelements (29) in den Innenhohlraum (27) des Aufnahmeelements (25);
- Verschieben des Feststellelements (31) in Bezug zum Aufnahmeelement (25) im Inneren des Innenhohlraums (27) von seiner Warteposition in seine aktive Position mit Hilfe eines mit dem Greifelement verbundenen Betätigungselements (85).

13. Verfahren zur Demontage einer ersten strukturellen oder funktionellen Baugruppe (3), die an einer zweiten strukturellen oder funktionellen Baugruppe (7) in einem Kraftfahrzeug mit Hilfe einer Befestigungsvorrichtung (1) nach Anspruch 6 befestigt ist, wobei das Verfahren einen Schritt umfasst, während dessen auf den Kopf (67) des Übertragungselements (49) eingewirkt wird, um das Übertragungselement (49) in Bezug zum Feststellelement (31) in eine Richtung zu drehen, wodurch die Verschiebung des Feststellelements (31) in Bezug zum Aufnahmeelement (25) entlang des Übertragungselements (49) von seiner aktiven Position in seine Warteposition hervorgerufen wird.

14. Verfahren zur Wiedermontage einer ersten strukturellen oder funktionellen Baugruppe (3), die an einer zweiten strukturellen oder funktionellen Baugruppe (7) in einem Kraftfahrzeug mit Hilfe einer Befestigungsvorrichtung (1) nach Anspruch 11 befestigt ist, wobei das Verfahren einen Schritt umfasst, während dessen auf den Kopf (67) des Übertragungselements (49) eingewirkt wird, um das Übertragungselement (49) in Bezug zum Feststellelement (31) in eine Richtung zu drehen, wodurch die Verschiebung des Feststellelements (31) in Bezug zum Aufnahmeelement (25) entlang des Übertragungselements (49) von seiner Warteposition in seine aktive Position hervorgerufen wird, wobei der Absatz (95) des externen Teils (65) des Übertragungselements (49) an den Laschen (97) des Aufnahmeelements (25) zumindest während eines Teils der Verschiebung des Feststellelements (31) anliegt.

15. Einheit zur Befestigung einer ersten strukturellen oder funktionellen Baugruppe (3) an einer zweiten strukturellen oder funktionellen Baugruppe (7) in einem Kraftfahrzeug, wobei die Befestigungseinheit umfasst:
- eine Befestigungsvorrichtung (1), die dazu vorgesehen ist, die erste Baugruppe (3) in einer vorbestimmten Verwendungsposition in Bezug zur zweiten Baugruppe (7) zu befestigen;
- ein Greifelement, das die erste Baugruppe (3) in die Verwendungsposition verschieben kann;
- ein mit dem Greifelement verbundenes Betätigungselement (85);
wobei die Befestigungsvorrichtung umfasst:
- ein Aufnahmeelement (25), das mit der zweiten Baugruppe (7) verbunden ist und innen einen Innenhohlraum (27) definiert;
- ein Einsteckelement (29), das mit der ersten Baugruppe (3) verbunden ist, wobei das Einsteckelement (29) geeignet ist, in den Innenhohlraum (27) des Aufnahmeelements (25) in eine Einsteckrichtung einzugreifen;
- ein Feststellelement (31), das in Bezug zum Aufnahmeelement (25) im Inneren des Innenhohlraums (27) zwischen einer Warteposition, in der das Feststellelement (31) das Einstecken des Einsteckelements (29) in das Aufnahmeelement (25) in die Einsteckrichtung gestattet, und einer aktiven Position, in der das Feststellelement (31) mit dem Einsteckelement (29) zusammenwirkt, um das Einsteckelement (29) in Bezug zum Aufnahmeelement (25) mindestens in Einsteckrichtung festzustellen, beweglich ist, wobei das Feststellelement (31) geeignet ist, von seiner Warteposition in seine aktive Position durch das Betätigungselement (85) verschoben zu werden.

16. Kraftfahrzeug, umfassend:
- ein Gehäuse;
- ein Armaturenbrett (3), umfassend eine Querstrebe (5) ;
- mindestens zwei Befestigungsvorrichtungen (1) nach Anspruch 6, wobei die Befestigungsvorrichtungen (1) die beiden gegenüber liegenden Enden der Querstrebe (5) an starren Elementen (7) des Gehäuses befestigen;
wobei das Gehäuse Gehäuseseiten (19) umfasst, die seitlich nach außen zum Fahrzeug in Bezug zu den starren Elementen (7) angeordnet sind, wobei die Gehäuseseiten Durchgangsöffnungen (83) umfassen, die den Zugriff auf die Köpfe (67) der Schrauben (49) der Befestigungsvorrichtungen (1) ermöglichen.
